# EUROPEAN PATENT SPECIFICATION

(11) **EP 2 511 162 B1**
(45) Date of publication and mention of the grant of the patent: **27.11.2013**
(21) Application number: 12160968.9
(22) Date of filing: 23.03.2012
(51) Int. Cl.: B62D 35/00

(54) **Aerodynamic vehicle rear side body structure**
Aerodynamische hintere seitliche Karosserieanordnung eines Kraftfahrzeuges
Structure aérodynamique de carrosserie latérale dans la partie arrière d'un véhicule.

(30) Priority: 30.03.2011 JP 2011074943
(43) Date of publication of application: 17.10.2012
(73) Proprietor: Honda Motor Co., Ltd., Tokyo, 107-8556 (JP)
(72) Inventor: Hasegawa, Akira, Saitama, 351-0193 (JP); Masuta, Noriaki, Saitama, 351-0193 (JP); Asano, Sadayuki, Saitama, 351-0193 (JP); Ishii, Noriyuki, Saitama, 351-0193 (JP)
(74) Representative: Prechtel, Jörg

(56) References cited:
- EP-A1- 0 885 799
- US-A- 5 018 779
- US-A- 6 126 229

## Description

The present invention relates to a vehicle side body structure provided with an air separation section for deflecting and separating, from a side surface panel, air flowing rearwardly from in front of a vehicle body along the side surface panel.

Vehicle side body structures have been known, in which a rear combination lamp is provided on a curved section of a rear fender panel (side surface panel) between the upper end of a rear wheel house and a waistline of the vehicle body set in an upper portion of the rear fender panel, in which a projection portion projecting laterally outwardly from the outer surface of the curved section is formed on the outer surface of a front end portion of the rear combination lamp, and in which the projection portion defines a separation point for deflecting and separating, from the outer surface of the vehicle body, air flowing rearwardly from in front of the vehicle body along the outer surface of the rear fender panel. One example of such vehicle side body structures is disclosed in Japanese Patent No. 4321063 (hereinafter referred to as "relevant patent literature"), which can achieve an enhanced aerodynamic performance of the vehicle body.

In the vehicle side body structure disclosed in the relevant patent literature, where the projection portion provided on the rear combination lamp defines the separation point for deflecting and separating air from the outer surface of the vehicle body, however, a position and shape of the separation point would be determined in accordance with a position and shape of the rear combination lamp, which would thus result in limited freedom in deciding a position and shape of the separation point. Consequently, with the vehicle side body structure disclosed in the relevant patent literature, it has been difficult to reduce air resistance to the vehicle body to thereby improve the aerodynamic performance of the vehicle body.

US 6 126 229 A shows a vehicle side body structure according to the preamble of claim 1.

In view of the foregoing prior art problems, it is an object of the present invention to provide an improved vehicle side body structure which not only can appropriately separate air, flowing along a side surface of the vehicle body, from the side surface at a desired position of the side surface, but also can effectively reduce air resistance to the vehicle body by increasing an separated amount of the air.

In order to accomplish the above-mentioned object, the present invention provides an improved vehicle side body structure in accordance with claim 1. The structure includes: a side surface panel constituting a side surface of a vehicle body; a rear surface panel extending continuously from a rear end of the side surface panel to constitute a rear surface of the vehicle body; and an air separation section for separating, from the side surface panel, air flowing rearwardly from in front of the vehicle body along the side surface panel. The separation section includes: a first projection portion projecting laterally outwardly from the side surface panel in a direction intersecting with flows of the air from in front of the vehicle body; and a second projection portion disposed rearwardly of the first projection portion at a predetermined interval from the first projection portion and projecting laterally outwardly from the side surface panel, the second projection portion extending vertically along a vertical surface of the first projection portion.

With the air separation section including the first projection portion projecting laterally outwardly from the side surface panel in a direction intersecting with flows of the air from in front of the vehicle body and the second projection portion disposed rearwardly of the first projection portion at a predetermined interval from the first projection portion, the present invention can increase an amount of the air separated from the side surface panel, thereby reducing air resistance to the vehicle body. More specifically, a negative pressure region is produced between the side surface panel and air flows separated from the side surface panel by the first projection portion, and a part of the air flows (i.e., travel wind acting on the vehicle as the vehicle travels) is sucked into the negative pressure region toward the rear surface panel. However, the second projection portion can separate the part of the travel wind, which has failed to be separated due to the negative pressure region, from the side surface panel. Thus, the present invention can significantly reduce an amount of air going around the side surface of the vehicle body toward the rear surface of the vehicle body. As a result, the present invention can significantly reduce air resistance to the vehicle body and thereby improve fuel economy and traveling stability of the vehicle.

Preferably, in the vehicle side body of the present invention, a projecting end of the second projection portion is located farther from the side surface panel than a projecting end of the first projection portion. Thus, the second projection portion can more reliably separate the travel wind, having been sucked into the negative pressure region, from the surface of the vehicle body

Further, preferably, in the vehicle side body of the present invention, the first projection portion is disposed to slant forwardly and upwardly in such a manner that an upper end portion thereof is located closer to the front of the vehicle body than a lower end portion thereof. Thus, a part of travel wind flowing along the side surface panel flows toward the bottom of the vehicle, so that the part of travel wind flows along or in generally the same direction as travel wind flowing from the upper surface of a roof panel and down the rear surface panel. As a consequence, the travel wind from the upper surface of the roof panel and travel wind from the side surface panel can be prevented from joining together, as a result of which the present invention can significantly reduce air resistance to the vehicle body.

Furthermore, preferably, in the vehicle side body of the present invention, a distance between the first projection portion and the second projection portion gradually increases in a direction toward the upper end of the air separation section. Thus, travel wind flows more downward as it flows closer to the lower end portion of the first projection portion. Namely, with the distance between the first projection portion and the second projection portion gradually increasing in the direction toward the upper end of the air separation section, distances, along flowing directions of the travel wind flows, between the first projection portion and the second projection portion can be made substantially the same. Thus, separation of the travel wind can be effected reliably by the second projection portion.

Furthermore, in the vehicle side body of the present invention, the air separation section includes a connection portion integrally interconnecting the first projection portion and the second projection portion, and the connection portion includes a bottom portion located closer to the side surface panel than the projecting ends of the first and second projection portions, and a curved surface portion integrally interconnecting the bottom portion and the projecting end of the second projection portion. With such a bottom portion, separation, by the first projection portion, of travel wind can be effected more reliably. With the curved surface portion, separation, by the second projection portion, of travel wind can be effected more reliably.

Furthermore, preferably, in the vehicle side body of the present invention, the air separation section further includes a front surface portion extending from the side surface panel to the first projection portion while slanting from an imaginary line perpendicular to the side surface panel toward the rear of the vehicle body. With a slanting surface of the front surface portion, the present invention can direct travel wind, flowing along the side surface panel, to the first projection portion without killing momentum or force of the travel wind.

Furthermore, preferably, in the vehicle side body of the present invention, the air separation section further includes a rear surface portion extending from the side surface panel to the second projection portion while slanting from an imaginary line perpendicular to the side surface panel toward the front of the vehicle body. With such a rear surface portion, the present invention can gradually remove a rear negative pressure region produced behind the rear surface portion and thereby reduce wind-cutting sound.

Furthermore, preferably, in the vehicle side body of the present invention, the side surface panel includes a wheel arch portion for accommodating a rear wheel, and the air separation section is provided on the side surface panel in an area that is, in a height direction of the vehicle body, located below a boundary portion between the rear surface panel and a rear window glass extending obliquely rearwardly and downwardly from a rear end of a roof panel of the vehicle body and above an uppermost portion of the wheel arch section. Such an area is where a great amount of travel wind air would go around the side surface of the vehicle body toward the rear surface of the vehicle body. With the air separation section provided in that area, the present invention can most effectively reduce air resistance to the vehicle body.

Furthermore, preferably, in the vehicle side body of the present invention, the air separation section is formed as a component part separate from the side surface panel. The present invention allows the air separation section to be provided at any desired position on the side surface panel, and it also can achieve an enhanced freedom of shape of the air separation section. In addition, the present invention can simplify the construction of the side surface panel as compared to a case where the projection portions are formed directly on the side surface panel. Furthermore, the air separation section can be installed with ease, and it may be installed as an optional component part (aftermarket part).

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a perspective view of a vehicle employing a vehicle side body structure according to an embodiment of the present invention;
Fig. 2 is a side view of the vehicle of Fig. 1;
Fig. 3 is a view showing on enlarged scale a section encircled at 3 of Fig. 1;
Fig. 4 is a sectional view taken along line 4 - 4 of Fig. 3;
Fig. 5 is a view illustrating a shape of an air separation section in the vehicle side body structure of Fig. 1;
Fig. 6 is a sectional view schematically showing flows of air along the air separation section in the vehicle side body structure according to the embodiment of the present invention;
Fig. 7 is a view illustrating flows of air along the vehicle employing the vehicle side body structure according to the inventive embodiment; and
Fig. 8 is a view schematically showing flows of air along the air separation section in the vehicle side body structure according to the inventive embodiment.

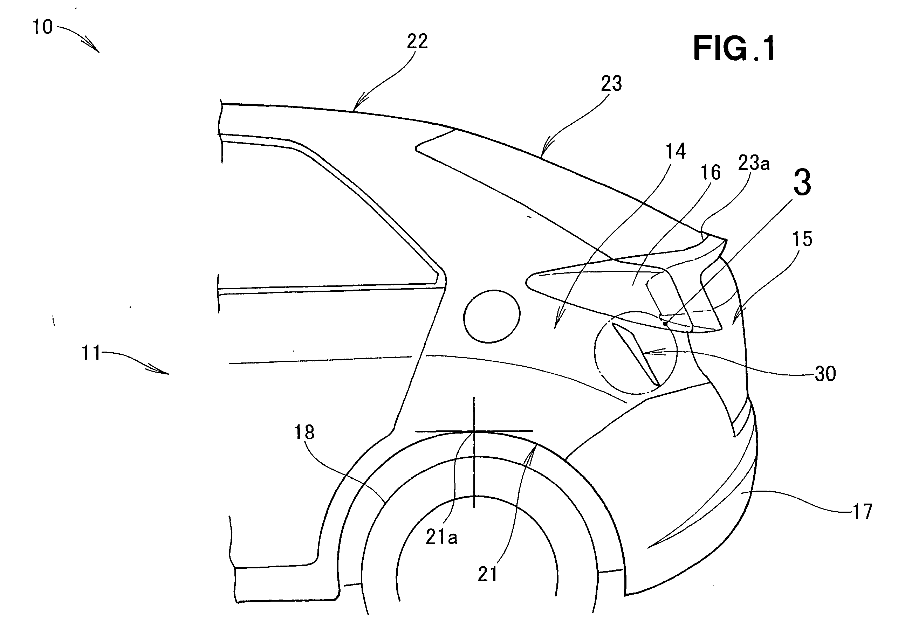

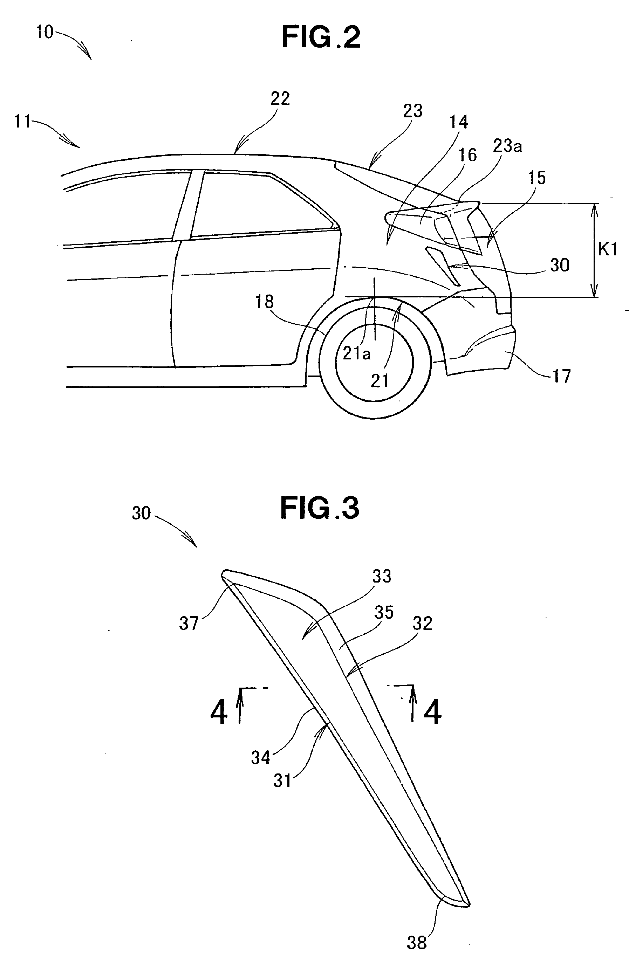

Reference is now made to Figs. 1 and 2 which are perspective and side views, respectively, of a vehicle 10 employing a vehicle side body structure according to an embodiment of the present invention. The vehicle 10 includes, on a vehicle body 11,: a side surface panel (rear fender panel) 14 constituting a side surface of the vehicle body 11; a rear surface panel 15 extending continuously from the rear end of the side surface panel 14 to constitute a rear surface of the vehicle body 11; a rear combination lamp 16 provided across adjoining portions of the side surface panel 14 and rear surface panel 15; a rear bumper face 17 disposed underneath the rear surface panel 15; an air separation section (side spoiler) 30 for deflecting and separating, from the side surface panel 14, air (or travel wind acting on the vehicle as the vehicle travels) flowing rearwardly from in front of the vehicle body 11 along the side surface panel 14; a wheel arch section 21 formed on the side surface panel 14 to accommodate a rear wheel 18; a roof panel 22 constituting an upper surface of the vehicle body; and a rear window glass 23 extending obliquely rearwardly and downwardly from the rear end of the roof panel 22 to the side surface panel 14.

The vehicle side body structure is a structure comprising the side surface panel 14, wheel arch section 21 and air separation section 30, and portions of the rear surface panel 15, roof panel 22 and rear window glass 23.

In Fig. 2, reference character K1 represents an air separation section setting area. The air separation section 30 is provided in the air separation section setting area K1 located below a boundary portion 23a between the rear surface panel 15 and the rear window glass 23 and above an uppermost portion 21a of the wheel arch section 21, as viewed in a height direction of the vehicle body 11. The air separation section 30 is formed as a separate component part from the side surface panel 14 and adhesively fixed to the side surface panel 14 by means of a double-faced tape 25.

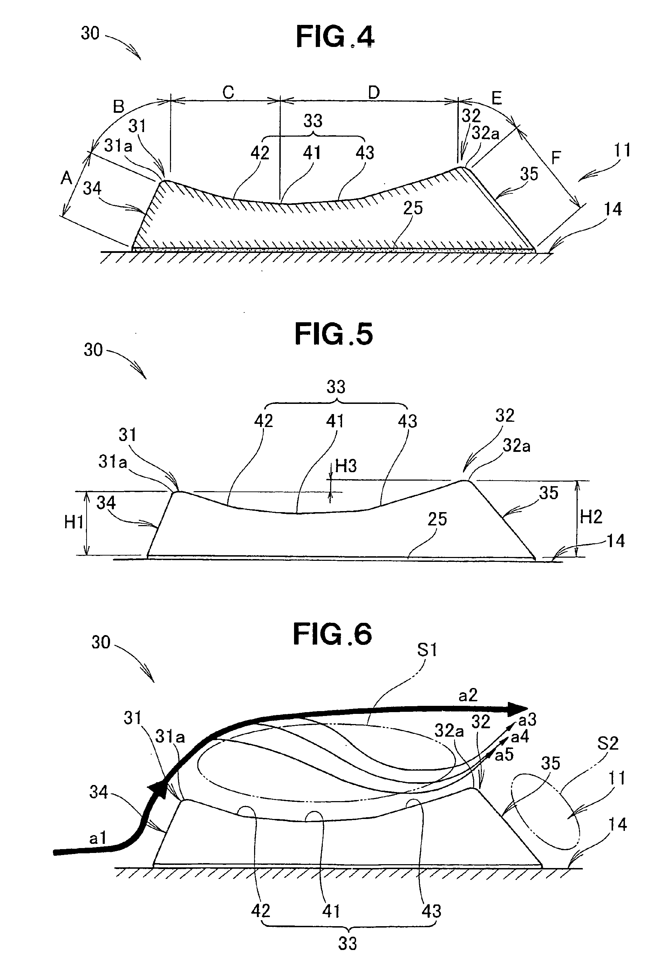

Fig. 3 is a view showing in enlarged scale a section encircled at 3 in Fig. 1, Fig. 4 is a sectional view taken along the 4 - 4 line in Fig. 3, and Fig. 5 is a view explanatory of a shape of the air separation section 30. As shown in Figs. 3 to 5, the air separation section 30 includes: a first projection portion 31 projecting laterally outwardly from the side surface panel 14 in a direction intersecting flows of air flowing rearwardly from in front of the vehicle body; a second projection portion 32 disposed rearwardly of the first projection portion 31 at a predetermined interval from the latter and extending vertically along the first projection portion 31; a connection portion 33 having a concavely-curved surface opposite from the side surface panel 14 and integrally interconnecting the first projection portion 31 and the second projection portion 32; a front surface portion 34 extending from the side surface panel 14 to the first projection portion 31 while slanting rearwardly (from an imaginary line perpendicular to the side surface panel 14) (i.e., slanting toward the rear of the vehicle body 11) as viewed in the cross section of the air separation section 30; and a rear surface portion 35 extending from the side surface panel 14 to the second projection portion 32 while slanting forwardly from an imaginary line perpendicular to the side surface panel 14 (i.e., slanting toward the front of the vehicle body 11) as viewed in the cross section of the air separation section 30.

The first projection portion 31 has an apex or projecting end 31a, while the second projection portion 32 has an apex or projecting end 32a. The first and second projection portions 31 and 32 are formed in such a manner that a distance between the two projection portions 31 and 32 gradually increases in a direction toward the upper end of the air separation section 30.

The connection portion 33 includes: a bottom portion 41 located closest to the side surface panel 14; a front curved surface portion 42 integrally interconnecting the bottom portion 41 and the first projection portion 31; and a rear curved surface portion 43 integrally interconnecting the bottom portion 41 and the second projection portion 32.

As can be appreciated from Fig. 4, the front surface portion 31 has a range A while the rear surface portion 35 has a range F. The front curved surface portion 42 has a range C while the rear curved surface portion 43 has a range D. The first projection portion 31 has a range B while the second projection portion 32 has a range E.

Turning now to Fig. 5, a projecting height from the side surface panel 14 to the projecting end 31a of the first projection portion 31 is indicated by H1 while a projecting height from the side surface panel 14 to the projecting end 32a of the second projection portion 32 is indicated by H2, and the projecting height H2 is greater than the projecting height H1 (H2 > H1). Thus, a difference H3 between the projecting height H2 and the projecting height H1 (i.e., H3 = H2 - H1) is greater than zero (H3 > 0). Such relationships of H2 > H1 and H3 > 0 are established throughout entire regions of the first and second projection portions 31and 32, as seen in a front-to-rear sectional view like Fig. 4 showing the air separation section 30 fixed to the side surface panel 14. Namely, in the front-to-rear sectional view, the projecting end 32a of the second projection portion 32 is located farther from the side surface panel 14 than the projecting end 31a of the first projection portion 31.

Fig. 6 is a sectional view schematically showing flows of air (travel wind) along the air separation section 30. The air (travel wind) flows are deflected by the front surface portion 34 as indicated by arrow a1 in such a manner that the air then flows rearwardly separated from the surface of the vehicle body 11 as indicated by arrow a2. Between the connection portion 33 (comprising the front curved surface portion 42, bottom portion 41 and rear curved surface portion 43) and the air flows indicated by arrow a2, there is produced a negative pressure region S1 due to the air flows having been separated from the surface of the vehicle body 11. By such a negative pressure region S1, a part of the air flows indicated by arrow a2 would be drawn toward the surface of the vehicle body 11 as indicated by arrows a3 to a5. However, by the rear curved surface portion 43 provided on the air separation section 30, the air flows indicated by arrows a3 to a5 can be directed laterally outwardly of the vehicle body 11. As a result, the instant embodiment can reliably separate the air flows from the surface of the vehicle body 11. Reference character S2 represents a rear negative pressure region S2 produced behind the rear surface portion 35 as will be later described.

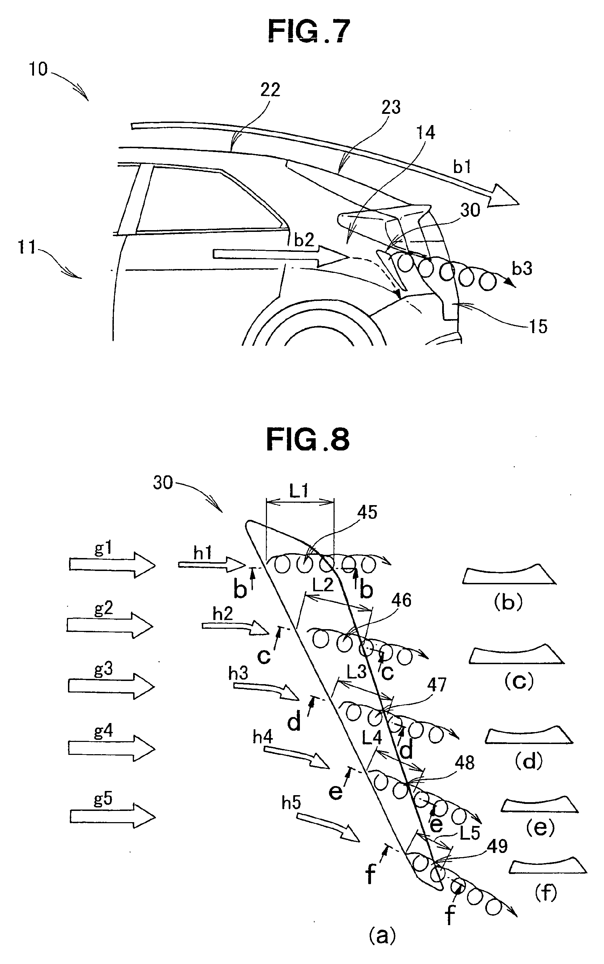

As shown in Fig. 7, a "downwash" flows from the upper surface of the roof panel 22 and down the rear window glass 23 as indicated by arrow b1. Meanwhile, air flows are produced alongside the side surface panel (rear fender) 14 of the vehicle body as indicated by arrow b2. Thus, the downwash flows along the rear window glass 23 and the air flows alongside the side surface panel 14 of the vehicle body interfere with each other behind the vehicle body, so that air vortex flows are produced behind the vehicle body 11. Due to such air vortex flows, the vehicle body would be subjected to increased air resistance, which may result in result fuel economy and traveling stability of the vehicle. Therefore, some improvement is required to suppress production of the air vortex flows.

Thus, in the instant embodiment, the first projection portion 31 of the air separation section 30, as shown in Fig. 3, slants forwardly and upwardly in such a manner that its upper end portion 37 is located closer to the front of the vehicle body than its lower end portion 38. Consequently, the air flows, having been separated from the surface of the vehicle body 11 by means of the first projection portion 31, are directed downwardly as indicated by arrow b3, so that the air flows alongside the vehicle body indicated by arrow b2 can be directed to flow along the downwash flows indicated by arrow b1. As a result, the instant embodiment can reliably suppress production of air vortex flows due to the downwash flows and the air flows alongside the side surface panel 14 of the vehicle body 11 interfering with each other behind the vehicle body 11.

Fig. 8 shows details of air flows (travel wind flows) and particularly shows how the air (travel wind) flows in a vertical height direction of the air separation section 30. In Fig. 8, (a) is a side view of the air separation section 30, (b) is a sectional view taken along the b - b line of (a), (c) is a sectional view taken along the c - c line of (a), (d) is a sectional view taken along the d - d line of (a), (e) is a sectional view taken along the e - e line of (a), and (a) is a sectional view taken along the f - fline of (a).

As shown and described in relation to Figs. 3, 4 and 8, the first projection portion 31 slants forwardly and upwardly in such a manner that its upper end portion 37 is located closer to the front of the vehicle body than its lower end portion 38, i.e. an upper portion of the front surface portion 34 is located ahead of a lower portion of the front surface portion 34.

With such an arrangement, air (travel wind) flowing at a height indicated by arrow g1 flows straight rearward along an upper portion 45 of the air separation section 30. Air flowing at a height indicated by arrow g2 flows along an upper middle portion 46 of the air separation section 30 while being deflected downward as indicated by arrow h2. Air flowing at a height indicated by arrow g3 flows along a middle portion 47 of the air separation section 30 while being deflected more downward than the air flowing along the upper middle portion 46 as indicated by arrow h3. Air flowing at a height indicated by arrow g4 flows along a lower middle portion 48 of the air separation section 30 while being deflected more downward than the air flowing along the middle portion 47 as indicated by arrow h4. Air flowing at a height indicated by arrow g5 flows along a lower portion 49 of the air separation section 30 while being deflected more downward than the air flowing along the middle lower portion 48 as indicated by arrow h5.

Herein, a length over which the air flows across the upper portion 45 of the air separation section 30 is referred to as "spoiler length L1", a length over which the air flows across the upper mille portion 46 of the air separation section 30 is referred to as "spoiler length L2", a length over which the air flows across the middle portion 47 of the air separation section 30 is referred to as "spoiler length L3", a length over which the air flows across the middle lower portion 48 of the air separation section 30 is referred to as "spoiler length L4", and a length over which the air flows across the lower portion 49 of the air separation section 30 is referred to as "spoiler length L5". These spoiler lengths L1 to L5 are set to establish a relationship of "L1 > L2 > L3 > L4 > L5"; however, theoretically, it is preferable that the relationship be as close as "L1 = L2 = L3 = L4 = L5".

More specifically, the negative pressure region S1 is produced between the side surface panel 14 and the air flows separated from the side surface panel 14 by the first projection portion 31 as shown in Fig. 6, and a part of the air flows is sucked into the negative pressure region S1 toward the rear surface panel 15. However, the second projection portion 32 can separate the part of the air flows, which has failed to be separated due to the negative pressure region S1, from the side surface panel 14. Thus, the present invention can significantly reduce an amount of air going around the side surface of the vehicle body toward the rear surface 15 of the vehicle body. As a result, the present invention can significantly reduce air resistance to the vehicle body 11 and thereby improve fuel economy and traveling stability of the vehicle.

Further, the projecting end 32a of the second projection portion 32, which is located farther from the side surface panel 14 than the projecting end 31a of the first projection portion 31 as seen in Fig. 5, can more reliably separate the travel wind, having been sucked into the negative pressure region S1, from the surface of the vehicle body 11, as shown in Fig. 6.

Further, because the first projection portion 31 of the air separation section 30, as shown in Figs. 3, 4 and 7, slants forwardly and forwardly in such a manner that its upper end portion 37 is located closer to the front of the vehicle body than its lower end portion 38, a part of the travel wind, flowing along the side surface panel 14, is directed in a downward direction of the vehicle body, so that it then flows along the travel wind flowing along the upper surface of the roof panel 22 and down the rear surface panel 15. Thus, the travel wind flows from the upper surface of the roof panel 22 and the travel wind flows from the side surface panel 14 can be prevented from joining together, as a result of which air resistance to the vehicle body can be significantly reduced.

Further, because the distance between the first projection portion 31 and the second projection portion 32 gradually increases in the direction toward the upper end of the air separation section 30, the travel wind, having passed the first projection portion 31, flows downward; at that time, the travel wind flows more downward (with a greater downward angle) the closer to the lower end portion 38 it flows. Namely, with the distance between the first projection portion 31 and the second projection portion 32 gradually increasing in the direction toward the upper end of the air separation section 30, distances, along the flowing directions of the travel wind flows, between the first projection portion 31 and the second projection portion 32 can be made substantially the same. Thus, separation, by the second projection portion 32, of the travel wind can be effected reliably.

Because the concavely-curved connection portion 33, integrally interconnecting the projection portions 31 and 32 in the air separation section 30, includes the bottom portion 41 closer to the side surface panel 14 than the first projecting end 31a and second projecting end 32a as shown in Figs. 4 and 6, separation, by the first projection portion 31, of the travel wind can be effected more reliably. Further, with the rear curved surface portion 43 integrally interconnecting the bottom portion 41 and the projecting end 32a of the second projection portion 32, separation, by the second projection portion 32, of the travel wind can be effected more reliably.

Furthermore, with the front surface portion 34 provided on the air separation section 30 and extending from the side surface panel 14 to the first projection portion 31 while slanting rearwardly (from the imaginary line perpendicular to the side surface panel 14) as shown in Figs. 4 to 6, the travel wind, flowing along the side surface panel 14, can be directed, by the slanting surface of the front surface portion 34, to the first projection portion 31 without momentum of the travel wind being killed. Thus, separation, by the first projection portion 31, of the travel wind can be effected more reliably.

Furthermore, with the rear surface portion 35 extending from the side surface panel 14 to the second projection portion 32 while slanting forwardly from the imaginary line perpendicular to the side surface panel 14 as shown in Figs. 4 to 6, the rear negative pressure region S2 produced behind the rear surface portion 35 can be reduced gradually, so that wind-cutting sound can be reduced.

Furthermore, the air separation section 30 is provided in the air separation section setting area K1 located below the boundary portion 23a between the rear surface panel 15 and the rear window glass 23 and above the uppermost portion 21a of the wheel arch section 21, as set forth above. Such an area K1 below the boundary portion 23a between the rear surface panel 15 and the rear window glass 23 and above the uppermost portion 21a is where a great amount of travel wind air goes around the side surface of the vehicle body toward the rear surface 15 of the vehicle body. With the air separation section 30 provided in the area K1, it is possible to most effectively reduce air resistance to the vehicle body 11.

Furthermore, because the air separation section 30 is formed as a separate component part from the side surface panel 14, the air separation section 30 can be provided at any desired position on the side surface panel 14, and an enhanced freedom of shape of the air separation section 30 can be reduced. In addition, it is possible to simplify the construction of the side surface panel 14 as compared to a case where the projection portions are formed directly on the side surface panel 14. Furthermore, the air separation section 30 can be installed with ease, and it may be installed as an optional component part (aftermarket part).

Whereas the spoiler lengths L1 to L5 in the vehicle side body structure of the present invention are set to establish a relationship of "L1 > L2 > L3 > L4 > L5, the present invention is not so limited, and it is preferable that the relationship be "L1 = L2 = L3 = L4 = L5".

The vehicle side body structure of the present invention is well suited for application to passenger cars, such as sedans and wagons.

## Claims

1. A vehicle side body structure including: a side surface panel (14) constituting a side surface of a vehicle body (11); a rear surface panel (15) extending continuously from a rear end of the side surface panel (14) to constitute a rear surface of the vehicle body; and an air separation section (30) for separating, from the side surface panel (14), air flowing rearwardly from in front of the vehicle body along the side surface panel (14),
wherein the separation section (30) includes: a first projection portion (31) projecting laterally outwardly from the side surface panel (14) in a direction intersecting with flows of the air from in front of the vehicle body; and a second projection portion (32) disposed rearwardly of the first projection portion (31) at a predetermined interval from the first projection portion and projecting laterally outwardly from the side surface panel (14), the second projection portion (32) extending vertically along a vertical surface of the first projection portion (31),
**characterized in that**
the air separation section (30) includes a connection portion (33) integrally interconnecting the first projection portion (31) and the second projection portion (32), and the connection portion (33) includes a bottom portion (41) located closer to the side surface panel (14) than the projecting ends (31a, 32a) of the first and second projection portions (31, 32), and a curved surface portion (43) interconnecting the bottom portion (41) and the projecting end (32a) of the second projection portion (32).

2. The vehicle side body structure according to claim 1, wherein a projecting end (32a) of the second projection portion (32) is located farther from the side surface panel (14) than a projecting end (31a) of the first projection portion (31).

3. The vehicle side body structure according to claim 1 or 2, wherein the first projection portion (31) is disposed to slant forwardly and upwardly in such a manner that an upper end portion (37) thereof is located closer to a front of the vehicle body than a lower end portion (38) thereof.

4. The vehicle side body structure according to any one of claims 1 to 3, wherein a distance between the first projection portion (31) and the second projection portion (32) gradually increases in a direction toward an upper end of the air separation section (30).

5. The vehicle side body structure according to any one of claims 1 to 4, wherein the air separation section (30) further includes a front surface portion (34) extending from the side surface panel (14) to the first projection portion (31) while slanting from an imaginary line perpendicular to the side surface panel toward a rear of the vehicle body.

6. The vehicle side body structure according to any one of claims 1 to 5, wherein the air separation section (30) further includes a rear surface portion (35) extending from the side surface panel to the second projection portion (32) while slanting from an imaginary line perpendicular to the side surface panel toward the front of the vehicle body.

7. The vehicle side body structure according to any one of claims 1 to 6, wherein the side surface panel (14) includes a wheel arch portion (21) for accommodating a rear wheel (18), and the air separation section (30) is provided on the side surface panel in an area (K1) that is, in a height direction of the vehicle body, located below a boundary portion (23a) between the rear surface panel and a rear window glass (23) extending obliquely rearwardly and downwardly from a rear end of a roof panel (22) of the vehicle body and above an uppermost portion of the wheel arch section (21).

8. The vehicle side body structure according to any one of claims 1 to 7, wherein the air separation section (30) is formed as a component part separate from the side surface panel (14).

## Patentansprüche

1. Fahrzeugseitenkarosseriestruktur, welche enthält: eine Seitenflächentafel (14), die eine Seitenfläche einer Fahrzeugkarosserie (11) darstellt, eine Rückseitentafel (15), die sich kontinuierlich von einem Hinterende der Seitenflächentafel (14) erstreckt, um eine Rückseite der Fahrzeugkarosserie darzustellen; sowie einen Luftablösungsabschnitt (30), um von der Seitenflächentafel (14) Luft abzulösen, die von vor der Fahrzeugkarosserie entlang der Seitenflächentafel (14) nach hinten fließt, worin der Ablösungsabschnitt (30) enthält: einen ersten Vorsprungsabschnitt (31), der seitlich auswärts von der Seitenflächentafel (14) in einer Richtung vorsteht, die sich mit Luftströmungen von vor der Fahrzeugkarosserie schneidet; und einen zweiten Vorsprungsabschnitt (32), der hinter dem ersten Vorsprungsabschnitt (31) mit einem vorbestimmten Intervall von dem ersten Vorsprungsabschnitt angeordnet ist und seitlich auswärts von der Seitenflächentafel (14) vorsteht, wobei sich der zweite Vorsprungsabschnitt (32) vertikal entlang einer vertikalen Oberfläche des ersten Vorsprungsabschnitts (31) erstreckt,
**dadurch gekennzeichnet, dass** der Luftablösungsabschnitt (30) einen Verbindungsabschnitt (33) enthält, der den ersten Vorsprungsabschnitt (31) mit dem zweiten Vorsprungsabschnitt (32) einstückig verbindet, und der Verbindungsabschnitt (33) einen Bodenabschnitt (41), der der Seitenflächentafel (14) näher angeordnet ist als die vorstehenden Enden (31a, 32a) der ersten und zweiten Vorsprungsabschnitte (31, 32), sowie einen gekrümmten Oberflächenabschnitt (43), der den Bodenabschnitt (41) mit dem vorstehenden Ende (32a) des zweiten Vorsprungsabschnitts (32) verbindet, enthält.

2. Die Fahrzeugseitenkarosseriestruktur nach Anspruch 1, worin ein vorstehendes Ende (32a) des zweiten Vorsprungsabschnitts (32) weiter von der Seitenflächentafel (14) angeordnet ist als ein vorstehendes Ende (31 a) des ersten Vorsprungsabschnitts (31).

3. Die Fahrzeugseitenkarosseriestruktur nach Anspruch 1 oder 2, worin der erste Vorsprungsabschnitt (31) nach vorne und aufwärts schräg angeordnet ist, derart, dass ein oberer Endabschnitt (37) davon einer Front der Fahrzeugkarosserie näher angeordnet ist als ein unterer Endabschnitt (38) davon.

4. Die Fahrzeugseitenkarosseriestruktur nach einem der Ansprüche 1 bis 3, worin ein Abstand zwischen dem ersten Vorsprungsabschnitt (31) und dem zweiten Vorsprungsabschnitt (32) in Richtung zu einem oberen Ende des Luftablösungsabschnitts (30) allmählich zunimmt.

5. Die Fahrzeugseitenkarosseriestruktur nach einem der Ansprüche 1 bis 4, worin der Luftablösungsabschnitt (30) ferner einen vorderen Oberflächenabschnitt (34) enthält, der sich von der Seitenflächentafel (14) zu dem ersten Vorsprungsabschnitt (31) hin erstreckt, während er von einer imaginären Linie, welche senkrecht zur Seitenflächentafel ist, zum Heck der Fahrzeugkarosserie abgeschrägt ist.

6. Die Fahrzeugseitenkarosseriestruktur nach einem der Ansprüche 1 bis 5, worin der Luftablösungsabschnitt (30) ferner einen Rückflächenabschnitt (35) enthält, der sich von der Seitenflächentafel zu dem zweiten Vorsprungsabschnitt (32) hin erstreckt, während er von einer imaginären Linie, welche senkrecht zur Seitenflächentafel ist, zur Front der Fahrzeugkarosserie abgeschrägt ist.

7. Die Fahrzeugseitenkarosseriestruktur nach einem der Ansprüche 1 bis 6, worin die Seitenflächentafel (14) einen Radbogenabschnitt (21) zur Aufnahme eines Hinterrads (18) enthält, und der Luftablösungsabschnitt (30) an der Seitenflächentafel in einem Bereich (K1), d.h. in Höhenrichtung der Fahrzeugkarosserie, unter einem Grenzabschnitt (23a) zwischen der Rückseitentafel und einer Heckglasscheibe (23) vorgesehen ist, die sich von einem Hinterende einer Dachtafel (22) der Fahrzeugkarosserie schräg nach hinten und abwärts erstreckt, und oberhalb eines obersten Abschnitts des Radbogenabschnitts (21) angeordnet ist.

8. Die Fahrzeugseitenkarosseriestruktur nach einem der Ansprüche 1 bis 7, worin der Luftablösungsabschnitt (30) als von der Seitenflächentafel (14) getrenntes Bauteil ausgebildet ist.

## Revendications

1. Structure latérale de carrosserie d'un véhicule incluant: un panneau de surface latéral (14) constituant une surface latérale d'une carrosserie de véhicule (11); un panneau de surface arrière (15) s'étendant en continu depuis une extrémité arrière du panneau de surface latéral (14) pour constituer une surface arrière de la carrosserie de véhicule; et une section de séparation d'air (30) pour séparer du panneau de surface latéral (14) l'air s'écoulant vers l'arrière depuis l'avant de la carrosserie du véhicule le long du panneau de surface latéral (14),
dans lequel la section de séparation (30) comprend: une première partie en saillie (31) dépassant latéralement vers l'extérieur du panneau de surface latéral (14) dans une direction intersectant les flux d'air venant de l'avant de la carrosserie du véhicule; et une deuxième partie en saillie (32) disposée à l'arrière de la première partie en saillie (31) à un intervalle prédéterminé de la première partie en saillie et s'étendant latéralement vers l'arrière depuis le panneau de surface latéral (14), la deuxième partie en saillie (32) s'étendant verticalement le long d'une surface verticale de la première partie en saillie (31),
**caractérisée en ce que**
la section de séparation d'air (30) comprend une partie de connexion (33) interconnectant intégralement la première partie en saillie (31) et la deuxième partie en saillie (32), et la partie de connexion (33) comprend une partie inférieure (41) située plus près du panneau de surface latéral (14) que les extrémités en saillie (31a, 32a) des première et deuxième parties en saillie (31, 32), et une partie de surface incurvée (43) interconnectant la partie inférieure (41) et l'extrémité en saillie (32a) de la deuxième partie en saillie (32).

2. Structure latérale de carrosserie d'un véhicule suivant la revendication 1, dans laquelle une extrémité en saillie (32a) de la deuxième partie en saillie (32) est située plus loin du panneau de surface latéral (14) qu'une extrémité en saillie (31a) de la première partie en saillie (31).

3. Structure latérale de carrosserie d'un véhicule suivant la revendication 1 ou 2, dans laquelle la première partie en saillie (31) est disposée de façon à s'incliner vers l'avant et vers le haut de telle manière qu'une partie d'extrémité supérieure (37) de celle-ci est située plus près de l'avant de la carrosserie du véhicule qu'une partie d'extrémité inférieure (38) de celle-ci.

4. Structure latérale de carrosserie d'un véhicule suivant l'une des revendications 1 à 3, dans laquelle une distance entre la première partie en saillie (31) et la deuxième partie en saillie (32) augmente graduellement dans une direction vers une extrémité supérieure de la section de séparation d'air (30).

5. Structure latérale de carrosserie d'un véhicule suivant l'une des revendications 1 à 4, dans laquelle la section de séparation d'air (30) comprend en outre une partie de surface avant (34) s'étendant depuis le panneau de surface latéral (14) vers la première partie en saillie (31) tout en s'inclinant par rapport à une ligne imaginaire perpendiculaire au panneau de surface latéral vers l'arrière de la carrosserie du véhicule.

6. Structure latérale de carrosserie d'un véhicule suivant l'une des revendications 1 à 5, dans laquelle la section de séparation d'air (30) comprend en outre une partie de surface arrière (35) s'étendant depuis le panneau de surface latéral vers la deuxième partie en saillie (32) tout en s'inclinant par rapport à une ligne imaginaire perpendiculaire au panneau de surface latéral vers l'avant de la carrosserie du véhicule.

7. Structure latérale de carrosserie d'un véhicule suivant l'une des revendications 1 à 6, dans laquelle le panneau de surface latéral (14) comprend une partie en forme de passage de roue (21) pour accueillir une roue arrière (18), et la section de séparation d'air (30) est pourvue sur le panneau de surface latéral d'une zone (K1) qui est, dans une direction en hauteur de la carrosserie du véhicule, située en dessous d'une partie frontière (23a) entre le panneau de surface arrière et une vitre de fenêtre arrière (23) s'étendant en oblique vers l'arrière et vers le bas depuis une extrémité arrière d'un panneau de toiture (22) de la carrosserie du véhicule et au-dessus d'une partie la plus haute de la section en forme de passage de roue (21).

8. Structure latérale de carrosserie d'un véhicule suivant l'une des revendications 1 à 7, dans laquelle la section de séparation d'air (30) est formée comme un composant séparé du panneau de surface latéral (14).
